# EUROPEAN PATENT SPECIFICATION

(11) **EP 1 531 284 B1**
(45) Date of publication and mention of the grant of the patent: **17.04.2013**
(21) Application number: 03026159.8
(22) Date of filing: 14.11.2003
(51) Int. Cl.: F16G 5/16

(54) **Transverse element of a metal push belt and metal push belt**
Querelement eines metallisches Druckbands und metallisches Druckband
Élément transversal de courroie métallique de poussée et courroie métallique de poussée

(43) Date of publication of application: 18.05.2005
(73) Proprietor: ROBERT BOSCH GMBH, 70442 Stuttgart (DE)
(72) Inventor: Van der Meer, Cornelius Johannes Maria, 5032 XG Tilburg (NL)
(74) Representative: Plevier, Gabriel Anton Johan Maria

(56) References cited:
- EP-A- 0 747 493
- EP-A- 1 219 860
- FR-A- 2 080 270
- US-A- 4 290 753
- US-A- 4 917 658
- PATENT ABSTRACTS OF JAPAN vol. 2003, no. 05, 12 May 2003 (2003-05-12) -& JP 2003 004102 A (VAN DOORNES TRANSMISSIE BV), 8 January 2003 (2003-01-08)

## Description

The present invention relates to a transverse element for a push belt as mentioned in the preamble of the following main claim.

Such metal belts are generally known, e.g. from non-republished application NL-1020990 and from the patent specification EP-A-1219860, both in the name of Applicant. They have for a disadvantage that they are relatively difficult to produce. One such difficulty is to maintain the transverse elements in their desired, often fine blanked shape at hardening. It appears that at the process of hardening, in which the element is heated to a considerable extend, and subsequently cooled down relatively quickly to a relatively low temperature as is e.g. required for a common metal hardening process known per se, the elements tend to deform. For instance, for some element designs the lower part of an element seems to become bent or torsioned. Such deformation is highly undesired for a precision machine part as the metal push belt is. Apart from wasting the efforts of earlier parts in the process in this manner, any more or less deformed element poses a risk to the durability of any belt in which it could undesirably become incorporated, again posing a large amount of costs of warranty to the manufacturer.

It is therefor an object of the current invention to provide for transverse elements that are not, at least relatively less prone to deformation under the circumstances desired for hardening.

According to the invention, such is realised by the application of the features specified in the characterising portion of claim 1. With the features provided, transverse elements are considerably less prone to deformation than prior art elements, which do not have this novel feature. According to a hypothesis underlying the invention a difference in the ratio of an outside surface area and internal volume of different parts of the transverse element could be responsible for the internal stresses causing the noticed deformation. It appeared, moreover, that the decisive parts of the element were those below and above a so-called step indicating a difference in thickness between the said parts of the element. This model of the solution found in accordance with the invention also clarifies a typical manner of bending of known element designs at cooling or quenching, in that it was concluded that the relatively thin lower most part of the conventional element below step cools down and thus also shrinks substantially faster relative to the remainder of the element, which causes significant internal stresses and thereby may lead to plastic deformation of parts of the element.

The invention will now by way of example be elucidated further along a drawing in which:
figure 1 is a schematic representation of a continuously variable transmission in
which a belt according to the invention is normally included;
figure 2 represents a transverse element that forms part of the invention; and
figure 3 is graphical representation of the surface area/volume ratio of the parts above and below a stepped reduction line in an element.

In the figures, identical reference numbers relate to identical or at least comparable technical features.

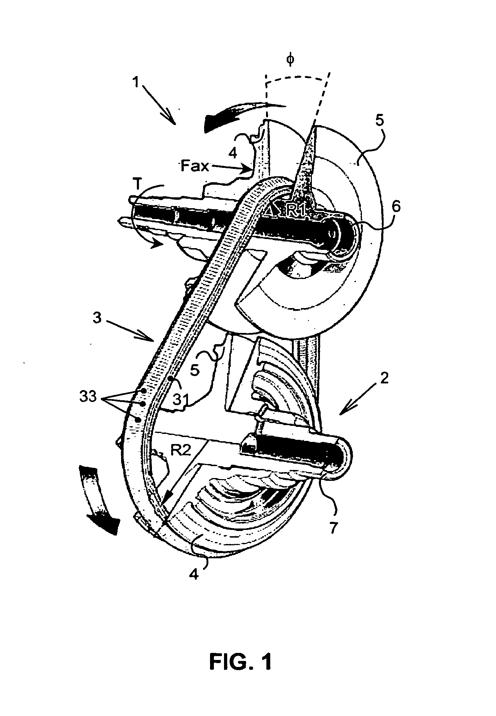

Figure 1 shows the central parts of a known continuous variable transmission, as is commonly applied in the drive line of personal vehicles between the engine and the drive wheels thereof. The transmission comprises two pulleys 1, 2, each provided with two pulley sheaves 4, 5, between which a metal push belt 3 is present for transmitting a rotational movement and an accompanying torque from the one pulley 4,5 to the other 4, 5. The pulley sheaves 4, 5 are generally shaped conical and at least one pulley sheave 4 is incorporated in the transmission axially moveable along a respective pulley shaft 6, 7 over which it is placed. The transmission generally also comprises activation means that impose on the said at least one sheave 4 an axially oriented clamping force Fax directed towards the respective other pulley sheave 5 such that the belt 3 is clamped there between.

The belt 3 comprises an endless tensile means 31 and a multitude of plate-like transverse elements 33 that are provided on the tensile means 31 oriented predominantly transversely thereto and movable along its longitudinal direction. The elements 33 take-up the clamping force Fax, such that at rotation of a driving pulley 1, friction between the sheaves 4, 5 and the belt 3, causes the elements 33 to be thrust from the driving pulley 1 to the driven pulley 2, around the drive pulley 2 and back to the driving pulley 1, thereby being guided and supported by the tensile means 31.

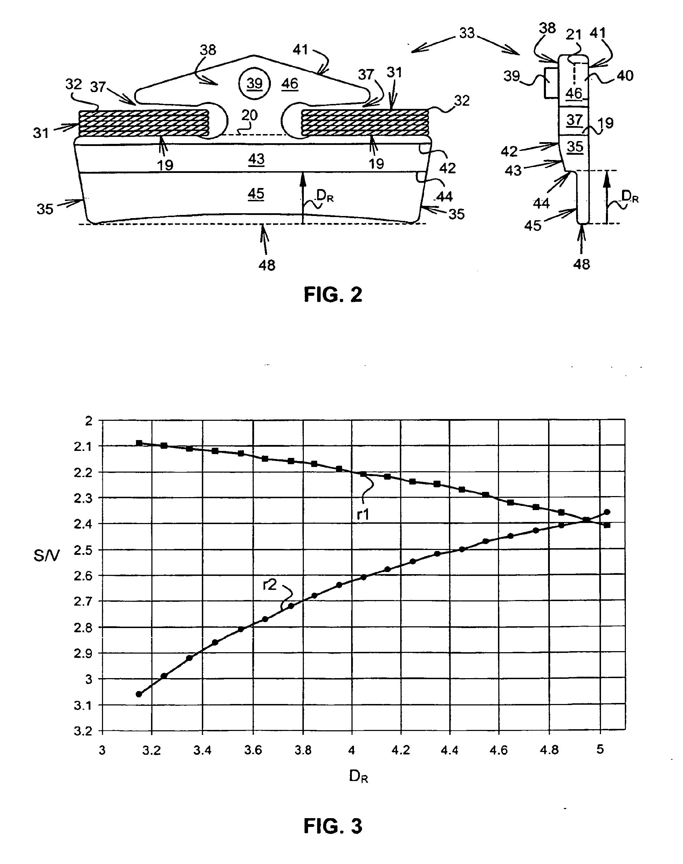

In figure 2 an embodiment of a transverse element 33 as essentially commonly applied in the art is provided as seen in the longitudinal direction of the belt 3 and in a simplified side elevation thereof. It is shown therein that the tensile means 31 is composed of two sets of radial nested thin metal rings 32, each set inserted into a predominantly transversely oriented recess 37 of the element 33 and supported by a bearing surface 19 of the recess 37. The elements 33 are provided with a protrusion 39 protruding from a front principle face 38 thereof, for interaction with a hole 40 provided in a back principle face 41 thereof and indicated by the dashed lines 21, so as to mutually align and/or position two adjacent transverse elements 33. The transverse elements 33 are further provided with lateral side faces 35 that during operation may be clamped between and arrive in frictional contact with the sheaves 4, 5 of the driving pulley 1 and of the driven pulley 2 respectively.

So as to allow a mutual rocking about a generally axially oriented line of contact on the elements 33 when a section of the belt 3 passes an arc-shaped trajectory part within a pulley 1, 2, the elements 33 are provided with a so-called rocking edge 42 on their respective front principle faces 38 defining an axially oriented, sharp or slightly rounded edge between two sections of the front principle face 38 that are mutually oriented at an angle. From the rocking edge 42 downwards, the element 33 is provided with a reduced thickness, i.e. is tapered in the longitudinal direction of the belt 33 with respect to its thickness above the rocking edge 42 as seen in side elevation, which element part is denoted here as the lower body part 42-45. Such reduced thickness is commonly provided in the form of a continuously and smoothly sloping part 43, relative to an upper body part 46 of the element above the rocking edge 42, via which the force to be transmitted is carried between the elements 33 in a straight trajectory part of the belt 3 in-between the pulleys 1, 2. A such like type of push belt 3 is described more in detail in, for example, the European patent publication EP-A-0626526. The current and preferred element design additionally shows a stepped reduction in the thickness of the lower body part 42-45, whereby a step 44 is provided below the sloping part 43 at which location there is provided a sudden thickness reduction. The step 44 creates a division in the lower body part 42-45 of the element 33, such that both a radially outer part 42, 43 may be discerned therein, which includes the rocking edge 42, the sloping part 43, as well as a radially inner part 45, which corresponds to the part of the lower body part 42-45 located below, i.e. radially inward from, the step 44. The incorporation of the step 44 is often preferred because it saves element weight and cost and improves the accuracy and robustness of the blanking process that is predominantly used to cut and shape the elements 33.

Figure 3 is a graphical representation, illustrating the insight provided by and underlying the present invention. To the horizontal or X-axis is provided a radial level D_{R} in millimetres, which corresponds to a perpendicularly measured distance between a radial innermost side 48 of an element 33 to the step 44. The vertical or Y-axis indicates a so called SN-ratio of a relevant element body part defined as an outer surface area S, i.e. the area available for heat transfer with the environment, divided by a volume V of the respective relevant element body part. This ratio is considered representative of how fast the respective element body part cools down at quenching, i.e. how easy heat is transferred from the element body to the environment, i.e. quenching or cooling medium. In accordance with the present invention this ratio has been determined for the element parts located below (curve r2), respectively above (curve r1) the step 44, i.e. for the radially inner part 45 of the lower body part 42-45, which is indicated by curve r2, and for the combined upper body part 46 and radially outer part 42-44 of the lower body part 42-45, which is indicated by curve r1, respectively. Obviously, these two S/V-ratios vary with the radial level D_{R} of the step 44, as indicated by curves r1 and r2 for a given element. According to the invention the optimum radial level D_{R} of the step 44 corresponds to where the curves r1 and r2 intersect in figure 3. In which case the cooling down of the element 33 is expected to be more or less equally distributed and internal stresses and accompanying deformations will favourably be kept to a minimum. According to the invention, it is considered that the above-mentioned deformation is unlikely to occur, at least not to an unacceptable extend, within a margin of about 10% around the above-defined optimum radial level D_{R}.

At this point it is remarked that model and practice studies show that, as a good approximation, in calculating the SN-ratio of the combined upper body part 46 and radially outer part 42-44 of the lower body part 42-45, the upper most parts of the element 33 above the level of the bearing surface 19 may be disregarded for many of the known element designs, because the influence of these upper most parts on the cooling behaviour of the rest of the element 33 is negligible, if not virtually absent. In these cases, for the purpose of determining the ratio between the surface area S and the volume V according to curve r1, the upper body part 46 may be considered to extend only to the radial level of the bearing surface 19 as indicated by the dashed line 20 in figure 2. However, in this case a cross-sectional area of the element 33 at such radial level (the width whereof being indicated by line 20) should not be included in the said surface area S of the combined upper body part 46 and radially outer part 42-44, because it does not provide a direct heat transfer to the environment.

In the example illustrated in figure 3 the intersection of the curves r1, r2, which represents the optimum SN-ratio value for the above-mentioned relevant element body parts 45 and 46, 42-44 respectively, defines the optimum radial level D_{R} for the step 44 at almost 5 mm. For the element design that formed the basis for this example, this implied that the step 44 should be located immediately below the rocking edge 42 to achieve the optimum results, i.e. minimise element deformation at quenching. Since such desired close proximity of the rocking edge and the step 44 may hamper manufacturing, in particular the known element blanking process, it is suggested by the invention to modify the element design such that the SN-ratio of the radially inner part 45 is decreased, for example by designing the radial innermost surface of the element 33 as a predominantly flat surface, possibly showing a slight concave curvature as shown in figure 2, compared to the commonly applied arc-shaped or even more intricately profiled bottom element surfaces, thereby decreasing the surface area S of this radially inner part 45. In such element design the step 44 may be located at a radial level D_{R} as measured from a radial innermost side 48 that is larger than two thirds of a radial dimension of the lower body part 42-45.

The above explained, novel criterion for detailed element design is in particular relevant when used in combination with a manufacturing method in which element hardening is realised by quenching the elements, after being heated, in an oil bath or an alternative agent for cooling down for material hardening purposes. Among these alternative agents are water, salt bath, or a gas such as air. The relative quick cooling of all of the material of the element is a known technical requirement at quenching.

## Claims

1. Transverse element (33) for a metal push belt (3) comprising an endless tensile means (31) and a plurality of relatively thin transverse elements (33) incorporated in the belt (3) freely moveable along the endless tensile means (31) and oriented predominantly transversely thereto, the transverse elements (33) showing an upper body part (46) defining a recess (37) and a bearing surface (19), respectively for taking-up and for supporting the endless tensile means (31), and a tapered lower body part (42-45) defining a predominantly axially oriented step (44) dividing the lower body part (42-45) into a radially outer part (42, 43) and a radially inner part (45) of reduced thickness with respect to the radially outer part (42, 43), **characterised in that** the S/V-ratio of the radially inner part (45), i.e. the outer surface area S of that part available for heat transfer with the environment divided by the internal volume V of that part, corresponds to the corresponding S/V-ratio of the other parts (42, 43, 46) of the transverse element (33) that include the said radially outer part (42, 43) and the upper body part (46) such that a smallest of the S/V-ratio values defined thereby has a value within a range of 90% to 100% of the largest value of those S/V-ratios

2. Transverse element (33) for a metal push belt (3) comprising an endless tensile means (31) and a plurality of relatively thin transverse elements (33) incorporated in the belt (3) freely moveable along the endless tensile means (31) and oriented predominantly transversely thereto, the transverse elements (33) showing an upper body part (46) defining a recess (37) and a bearing surface (19), respectively for taking-up and for supporting the endless tensile means (31), and a tapered lower body part (42-45) defining a predominantly axially oriented step (44) dividing the lower body part (42-45) into a radially outer part (42, 43) and a radially inner part (45) of reduced thickness with respect to the radially outer part (42, 43), **characterised in that** the S/V-ratio of the radially inner part (45), i.e. the outer surface area S of that part available for heat transfer with the environment divided by the internal volume V of that part, corresponds to a corresponding S/V-ratio of the combined radially outer part (42, 43) and a section of the upper body part (46) that is located below the radial level of the bearing surface (19) of the element (33) such that a smallest of the S/V-ratio values defined thereby has a value within a range of 90% to 100% of the largest value of those S/V-ratios.

3. Transverse element (33) according to claim 1 or 2, **characterised in that** the SN-ratio values defined thereby are essentially equal.

4. Transverse element (33) according to any one of the preceding claims, **characterised in that** the step (44) is located at a radial level (D_{R}) as measured from a radial innermost side (48) that is larger than two thirds of a radial dimension of the lower body part (42-45) and **in that** a radially inner or bottom surface of the transverse element (33) is shaped predominantly flat and straight.

5. Metal push belt (3) comprising an endless tensile means (31) and a plurality of transverse elements (33) according to any one of the preceding claims.

## Patentansprüche

1. Querelement (33) für ein metallisches Druckband (3), das ein Endloszugmittel (31) und mehrere relativ dünne Querelemente (33) umfasst, die im Band (3) eingefügt, entlang dem Endloszugmittel (31) frei bewegbar sowie überwiegend quer dazu angeordnet sind, wobei die Querelemente (33) ein oberes Körperelement (46), das einen Rücksprung (37) sowie eine Anlagefläche (19) definiert, um das Endloszugmittel (31) aufzunehmen bzw. abzustützen, sowie ein konisches unteres Körperelement (42 - 45) aufweist, das eine überwiegend axial orientierte Stufe (44) definiert, die das untere Körperelement (42 - 45) in ein radial äußeres Element (42, 43) und ein radial inneres Element (45) mit reduzierter Dicke im Verhältnis zum radial äußeren Element (42, 43) unterteilt, **dadurch gekennzeichnet, dass** das S/V-Verhältnis des radial inneren Elements (45), d.h. die äußere Fläche S dieses für eine Wärmeübertragung mit der Umgebung verfügbaren Elements, dividiert durch das interne Volumen V dieses Elements, dem entsprechenden S/V-Verhältnis der anderen Elemente (42, 43, 46) des Querelements (33), die das radial äußere Element (42, 43) und das obere Körperelement (46) beinhalten, entspricht, so dass ein kleinster der dadurch definierten S/V-Verhältnis-Werte einen Wert innerhalb eines Bereichs von 90% bis 100% des größten Wertes dieser S/V-Verhältnisse aufweist.

2. Querelement (33) für ein metallisches Druckband (3), das ein Endloszugmittel (31) und mehrere relativ dünne Querelemente (33) umfasst, die im Band (3) eingefügt, entlang dem Endloszugmittel (31) frei bewegbar sowie überwiegend quer dazu angeordnet sind, wobei die Querelemente (33) ein oberes Körperelement (46), das einen Rücksprung (37) sowie eine Anlagefläche (19) definiert, um das Endloszugmittel (31) aufzunehmen bzw. abzustützen, sowie ein konisches unteres Körperelement (42 - 45) aufweist, das eine überwiegend axial orientierte Stufe (44) definiert, die das untere Körperelement (42 - 45) in ein radial äußeres Element (42, 43) und ein radial inneres Element (45) mit reduzierter Dicke im Verhältnis zum radial äußeren Element (42, 43) unterteilt, **dadurch gekennzeichnet, dass** das S/V-Verhältnis des radial inneren Elements (45), d.h. die äußere Fläche S dieses für eine Wärmeübertragung mit der Umgebung verfügbaren Elements, dividiert durch das interne Volumen V dieses Elements, einem entsprechenden S/V-Verhältnis des kombinierten radial äußeren Elements (42, 43) und eines Bereichs des oberen Körperelements (46), der sich unterhalb des radialen Niveaus der Anlagefläche (19) des Elements (33) befindet, entspricht, so dass ein kleinster der dadurch definierten S/V-Verhältnis-Werte einen Wert innerhalb eines Bereichs von 90% bis 100% des größten Wertes dieser S/V-Verhältnisse aufweist.

3. Querelement (33) nach Anspruch 1 oder 2, **dadurch gekennzeichnet, dass** die dadurch definierten S/V-Verhältnis-Werte im Wesentlichen gleichwertig sind.

4. Querelement (33) nach einem der vorstehend aufgeführten Ansprüche, **dadurch gekennzeichnet, dass** sich die Stufe (44), gemessen von einer radial innersten Seite (48) aus, auf einem radialen Niveau (D_{R}) befindet, das größer als zwei Drittel einer radialen Abmessung des unteren Körperelements (42 - 45) ist, und dass eine radial innere oder Bodenfläche des Querelements (33) überwiegend flach und gerade geformt ist.

5. Metallisches Druckband (3), das ein Endloszugmittel (31) und mehrere Querelemente (33) nach einem der vorstehend aufgeführten Ansprüche umfasst.

## Revendications

1. Elément transversal (33) pour une courroie métallique de poussée (3) comprenant un moyen de traction sans fin (31) et une pluralité d'éléments transversaux relativement minces (33) incorporés dans la courroie (3) capables de se déplacer librement le long du moyen de traction sans fin (31) et orientés principalement dans le sens transversal à celui-ci, les éléments transversaux (33) présentant une partie de corps supérieur (46) définissant une cavité (37) et une surface portante (19) pour, respectivement, accepter et supporter le moyen de traction sans fin (31), et une partie de corps inférieur inclinée (42-45) définissant un gradin (44) orienté principalement dans le sens axial divisant la partie de corps inférieur (42-45) en une partie radialement extérieure (42, 43) et une partie radialement intérieure (45) qui présente une épaisseur réduite par rapport à la partie radialement extérieure (42, 43), **caractérisé en ce que** le rapport S/V de la partie radialement intérieure (45), c'est-à-dire la région de surface extérieure S de cette partie qui est disponible au transfert de chaleur avec l'environnement divisée par le volume interne V de cette partie, correspond au rapport S/V correspondant des autres parties (42, 43, 46) de l'élément transversal (33) qui comprennent ladite partie radialement extérieure (42, 43) et la partie de corps supérieur (46) de manière à ce que la plus petite des valeurs de rapport S/V ainsi définie présente une valeur comprise dans une fourchette de 90 % à 100 % de la plus grande valeur de ces rapports S/V.

2. Elément transversal (33) pour une courroie métallique de poussée (3) comprenant un moyen de traction sans fin (31) et une pluralité d'éléments transversaux relativement minces (33) incorporés dans la courroie (3) capables de se déplacer librement le long du moyen de traction sans fin (31) et orientés principalement dans le sens transversal à celui-ci, les éléments transversaux (33) présentant une partie de corps supérieur (46) définissant une cavité (37) et une surface portante (19) pour, respectivement, accepter et supporter le moyen de traction sans fin (31), et une partie de corps inférieur inclinée (42-45) définissant un gradin (44) orienté principalement dans le sens axial divisant la partie de corps inférieur (42-45) en une partie radialement extérieure (42, 43) et une partie radialement intérieure (45) qui présente une épaisseur réduite par rapport à la partie radialement extérieure (42, 43), **caractérisé en ce que** le rapport S/V de la partie radialement intérieure (45), c'est-à-dire la région de surface extérieure S de cette partie qui est disponible au transfert de chaleur avec l'environnement divisée par le volume interne V de cette partie, correspond à un rapport S/V correspondant de la combinaison de la partie radialement extérieure (42, 43) et d'une section de la partie de corps supérieur (46) qui est située sous le niveau radial de la surface portante (19) de l'élément (33) de manière à ce que la plus petite des valeurs de rapport S/V ainsi définie présente une valeur comprise dans une fourchette de 90 % à 100 % de la plus grande valeur de ces rapports S/V.

3. Elément transversal (33) selon la revendication 1 ou 2, **caractérisé en ce que** les valeurs de rapport S/V définies par celui-ci sont essentiellement égales.

4. Elément transversal (33) selon l'une quelconque des revendications précédentes, **caractérisé en ce que** l'étape (44) est située à un niveau radial (D_{R}) tel que mesuré depuis un côté le plus interne radialement (48) qui est supérieur à deux tiers d'une dimension radiale de la partie de corps inférieur (42-45) et **en ce qu'**une surface radialement intérieure ou inférieure de l'élément transversal (33) est formée principalement de manière plane et droite.

5. Courroie métallique de poussée (3) comprenant un moyen de traction sans fin (41) et une pluralité d'éléments transversaux (33) selon l'une quelconque des revendications précédentes.
